# EUROPEAN PATENT SPECIFICATION

(11) **EP 0 647 804 B1**
(45) Date of publication and mention of the grant of the patent: **27.01.1999**
(21) Application number: 94116028.5
(22) Date of filing: 11.10.1994
(51) Int. Cl.: F16J 9/24, F02M 69/08, F02B 77/11

(54) **Internal combustion engine**
Brennkraftmaschine
Moteur à combustion interne

(30) Priority: 12.10.1993 JP 280230/93
(43) Date of publication of application: 12.04.1995
(73) Proprietor: YAMAHA HATSUDOKI KABUSHIKI KAISHA, Iwata-shi Shizuoka-ken, 438 (JP)
(72) Inventor: Ito, Eiichi, c/o Yamaha Hatsudoki K. K., Iwata-shi, Shizuoka-ken, 438 (JP); Okubo, Akihiko, c/o Yamaha Hatsudoki K. K., Iwata-shi, Shizuoka-ken, 438 (JP)
(74) Representative: Grünecker, Kinkeldey, Stockmair & Schwanhäusser Anwaltssozietät

(56) References cited:
- EP-A- 0 343 300
- EP-A- 0 454 101
- WO-A-87/00575
- PATENT ABSTRACTS OF JAPAN vol. 11, no. 10 (M-552) (2457) 10 January 1987 & JP-A-61 187 563 (YAMAHA) 21 August 1986

## Description

The present invention relates to an internal combustion engine comprising at least one cylinder with a piston reciprocatably received therein, said piston being provided at its outer circumferential surface with at least one piston ring having a ring opening for allowing radial expansion and compression, respectively of said piston ring, and a fuel injection valve means for injecting fuel directly into said cylinder.

Such an internal combustion engine is known from WO-A-87/00575. Internal combustion engines normally use pistons having the following structure, namely a piston unit and piston rings which are fitted around its circumference near the top of the piston. A part of the piston ring is cut away, and the cut away area forms a mating opening. The piston ring itself evinces some resiliency, and is structured to expand outward in the radial direction; the piston ring thereby slides against the inside circumferential surface of the cylinder bore.

Also, in the prior art, a fuel injection valve could be mounted on one side in the radial direction of the combustion chamber, a part of which was bounded by the piston ring, so that fuel could be injected toward the opposite side of the combustion chamber.

In this case, the fuel injected into the combustion chamber by the fuel injection valve is burned, causing the piston to slide inside the cylinder bore, with the piston ring forming a seal between the inside of the crankcase and the combustion chamber, enabling the engine to deliver the required drive.

As was described above, however, the mating opening of the above piston ring, which forms the seal between the crankcase and combustion chamber, comprises a gap, albeit small, and this mating opening is susceptible to being heated to higher temperatures than the other parts.

The heating of this mating opening to such high temperatures causes more carbon to be deposited in the mating opening than in other areas, and this can cause the phenomenon of the piston ring to become stuck to the piston unit (so-called "ring sticking").

When ring-sticking occurs, the above piston ring is impeded in its ability to expand outward in the radial direction as described above, its sealing properties are lessened thereby, and engine performance is degraded.

It is therefore an objective of the present invention to provide an internal combustion engine having an improved cooling arrangement for cooling the cylinder piston assembly so as to assure smooth reciprocal movement of the piston in the cylinder including high quality sealing properties between the surfaces of the piston and the cylinder bore and to assure the required engine performance.

According to the present invention the afore-mentioned objective is performed in that each piston ring is prevented from rotating around the longitudinal axis of the piston relative to the piston and the fuel injection valve means is disposed and aligned such that the fuel injection is directed towards the side of the cylinder where the ring opening of each piston ring is positioned.

Accordingly, the fuel which is injected towards the position of the ring opening, cools this ring opening and prevents the ring opening from overheating and hence the ring sticking that would normally result.

In order to meet the thermal demands and to transfer heat from the hot spots of the engine to the surrounding, modern engines are usually provided with a cooling system for cooling at least the cylinder, said cooling system including a coolant pump for circulating coolant through a coolant jacket formed around the cylinder bore. The coolant is therefore usually supplied to the coolant jacket through an inlet opening, it flows then through the coolant jacket, is discharged from the coolant jacket through an outlet opening and flows then through a radiator in order to transfer heat from the coolant to the surrounding. The coolant having a low temperature after flowing through the radiator is then returned to the coolant jacket.

Supplying the low temperature coolant to the coolant jacket through the inlet opening causes usually the problem that the portion of the coolant jacket close to the coolant inlet opening, in particular the inner wall of the coolant jacket opposite to said coolant inlet opening may be cooled more than the remainder of the coolant jacket. That may result in a non-uniform temperature distribution and may cause a deformation of the cylinder bore, so that the wear and tear of the contacting surfaces of the cylinder bores and the piston and the piston rings is increased and the engine performance deteriorates, because the fit between the cylinder bore and the piston and the piston rings deteriorates.

Therefore, according to a preferred embodiment of the present invention, the cooling of the cylinder piston asembly may be further enhanced in that a heat insulating means for preventing the cylinder from overcooling is provided on an inner surface wall of the coolant jacket opposite to the coolant inlet opening.

Accordingly, the temperature distribution in the material around the cylinder bore resulting from the coolant flowing through the coolant jacket is substantially uniform and heat deformation of the cylinder bores are prevented.

Preferred embodiments of the present invention are laid down in the further dependent claims.

Hereinafter the present invention is explained and illustrated in greater detail by means of preferred embodiments thereof in conjunction with accompanying drawings, wherein:
Fig. 1 is a partial enlarged view of a cylinder with a cylinder bore defined therein of an internal combustion engine according to a preferred embodiment of the present invention;
Fig. 2 is an overall schematic side view of the internal combustion engine mounted in a vehicle according to the embodiment of figure 1;
Fig. 3 is an overall bottom view of the engine including an exhaust pipe arrangement mounted to the vehicle according to the embodiment of figures 1 and 2;
Fig. 4 is a schematic front view of the engine mounted to the vehicle according to the embodiment of the preceding figures;
Fig. 5 is an enlarged partial view similar to the view of figure 3 of the engine according to the embodiment of the preceding figures;
Fig. 6 is an enlarged partial side view of the engine in a view similar to figure 2;
Fig. 7 is an enlarged partial view of the engine in a view similar to figure 4;
Fig. 8 is a back view of the engine according to the embodiment of the preceding figures;
Fig. 9 is a left side partial sectional view of the engine according to the embodiment of figure 1;
Fig. 10 is a vertical sectional view of the engine comprising three cylinder bores formed in a cylinder block, a cylinder head and pistons received in said cylinder bores and the crank shaft of the engine according to the embodiment of figure 1;
Fig. 11 is a sectional partial view of the engine along line 11-11 in figure 10;
Fig. 12 is a sectional view of the engine along line 12-12 of figure 11;
Fig. 13 is a sectional partial view of the cylinder including the cylinder bore, scavenging passages and an exhaust passage along line 13-13 in figure 12;
Fig. 14 is a sectional partial view of the engine along line 14-14 of figure 12;
Fig. 15 is an enlarged partial view of the engine in a view similar to figure 10;
Fig. 16 is a partial sectional view of the engine along line 16-16 in figure 15;
Fig. 17 is a sectional view of the engine along line 17-17 in figure 16;
Fig. 18 is a sectional and schematic view including the cylinder bore axis of the engine according to the embodiment of figure 1;
Fig. 19 is a partial front view of a piston, a connecting rod and a portion of the crank shaft;
Fig. 20 is a sectional view of the engine along line 20-20 in figure 12;
Fig. 21 is a side view of the piston including two piston rings and a portion of the cylinder bore wall according to the embodiment of figure 1;
Fig. 22 is a vertical sectional view of the piston in a view similar to figure 21;
Fig. 23 is a sectional view of the piston along line 23-23 of figure 21;
Fig. 24 is a vertical sectional partial view of the piston in the area of the piston ring opening of the upper piston ring according to the embodiment of the engine according to figure 1;
Fig. 25 is a perspective partial view of the piston including the piston ring and a piston pin for preventing the piston ring from rotating along line 25-25 of figure 24;
Fig. 26 is a schematic, perspective view of the cooling passage arrangement including a coolant jacket formed in the cylinder and a coolant inlet opening and a coolant outlet opening according to the embodiment of the engine according to figure 1.

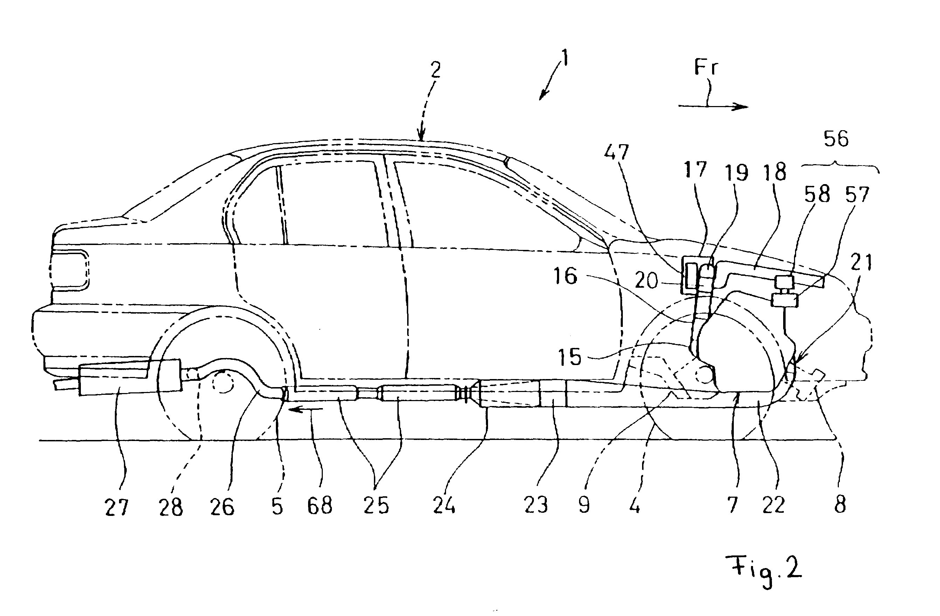

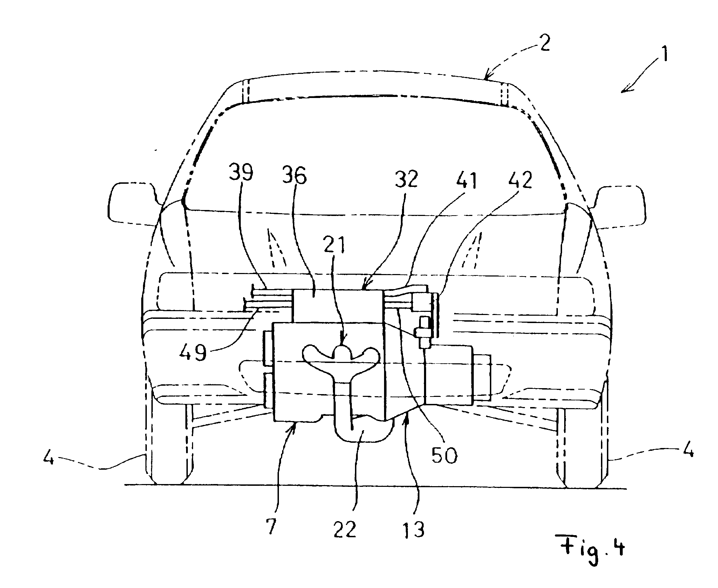

In Figures 2 through 9, 1 is an automobile; this automobile is composed of an autobody 2, a frame 2, left and right front wheels 4,4, and left and right rear wheels 5,5. In the Figures, the arrow labeled Fr points toward the front of the automobile 1, and references below to left and right will be based on facing toward the above front.

An air intake manifold 15 projects on the back surface of the above engine 7, and a throttle valve 16 is attached to the projecting end of this air intake manifold 15. The air cleaner 17 is mounted on the upper left side of the above mentioned engine 7, and a first air intake pipe extends frontward from this air cleaner 17, and a second air intake pipe 19 links the above throttle valve 16 and air cleaner 17.

An air flow sensor 20 is mounted in the above second air intake pipe 19.

An exhaust manifold 21 projects from the front surface of the above mentioned engine 7. A first exhaust pipe 22 connects with the projecting end of this exhaust manifold, and the trailing end of this first exhaust pipe 22 extends rearward below the above engine 7. A catalyst pipe 23, air first muffler 24, and second mufflers 25, 25 are attached consecutively to the trailing end of this first exhaust pipe 22. In addition, a second exhaust pipe 26 and a third muffler 27 are consecutively connected to the rear end of the above second muffler 25. There is also a branch pipe 28 which branches from the middle area of the above second exhaust pipe 26.

In the above configuration, the inside surface of the first exhaust pipe serves as the catalytic support. A temperature sensor 29 is also attached to the above mentioned catalyst pipe 23.

A fuel supply device 32 provides fuel 31 to the above mentioned engine 7. This fuel supply device 32 is loaded from a fuel tank 33 mounted in the rear of the autobody 2. An electrically driven fuel pump 34 is located inside this fuel tank 33. First through third fuel injection valves are attached to the above first through third cylinders 10-12. Fuel 31 expelled from the above mentioned fuel pump 34 is consecutively supplied to the above fuel injection valves 36 through fuel supply line 39. A fuel filter 40 is located midway in this fuel supply line 39. After the above fuel injection valves have been fed, the remaining fuel 31 is returned to the above mentioned fuel tank 33 by means of fuel return line 41; a pressure differential regulator 42 is located in this fuel return line 41.

An air pump 45 is mounted on the right side of the above mentioned engine 7. The inlet of this air pump is connected to the above air cleaner 17 by air intake pipe 46; a sensor 47 is mounted midway in this air intake pipe 46. The compressed air 48 that is delivered by the above air pump 45 is consecutively supplied to the above fuel injection valves, and then the remaining compressed air 48, is returned to the inside of the trailing end of the above first exhaust pipe 22 by means of air return pipe 50. The above mentioned pressure differential regulator 42 is inserted in this air return pipe 50.

Spark plugs 53 are mounted in the above mentioned first through third cylinders 10-12.

A lubrication device 56 supplies lubricating oil to the above engine 7. This lubrication device 56 consists of an oil pump device 57 which supplies lubricating oil 55 to various areas, and of an oil tank 58 which stores the lubricating oil 55 for the above oil pump device 57.

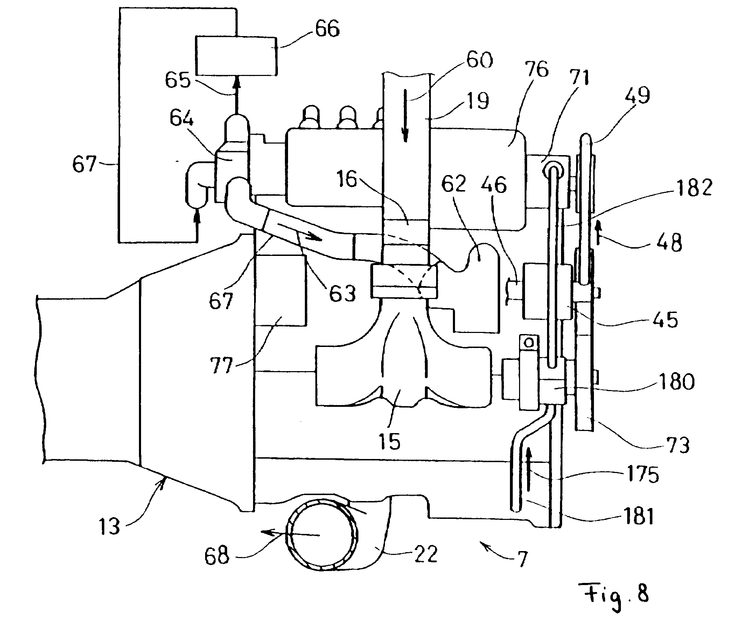

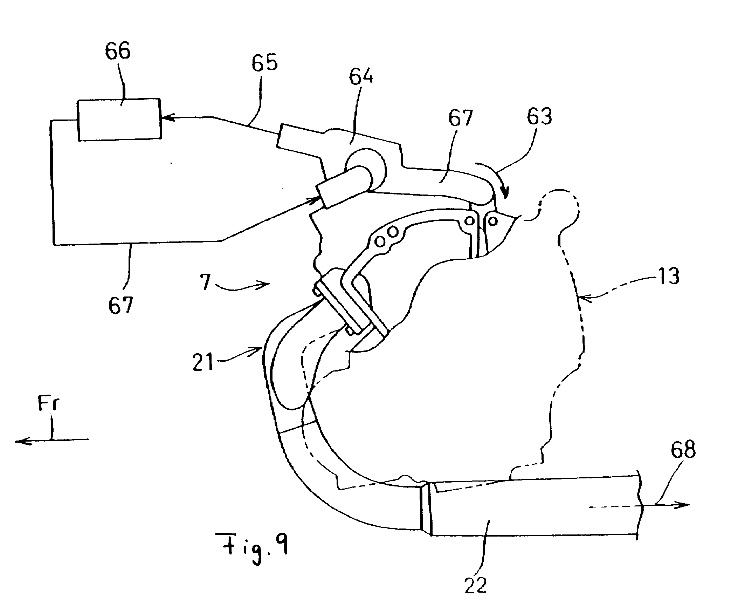

As shown in Figures 8 and 9, a water pump 62 is attached to the rear surface of the above engine 7. This water pump 62 is driven by the above mentioned engine 7. Coolant 63 is expelled from the outlet of the above water pump and circulates inside the engine 7 to cool it. Thereupon this same coolant water is sent to the radiator 66 through the thermostat 64 and the water pipe 65. In the radiator it is air-cooled before passing through the water return pipe 64 returning it to the inlet of the above water pump 62, whereupon it is recirculated as described above.

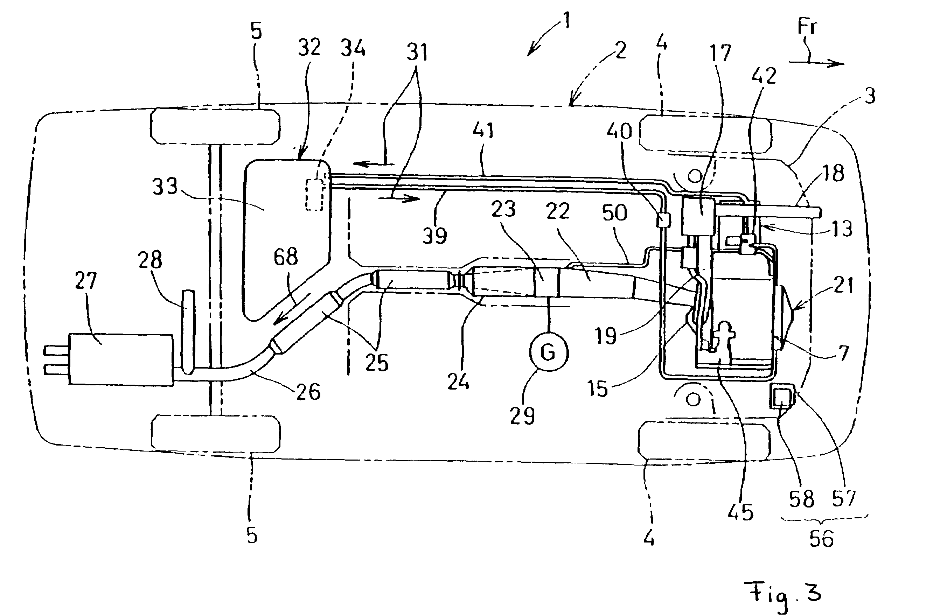

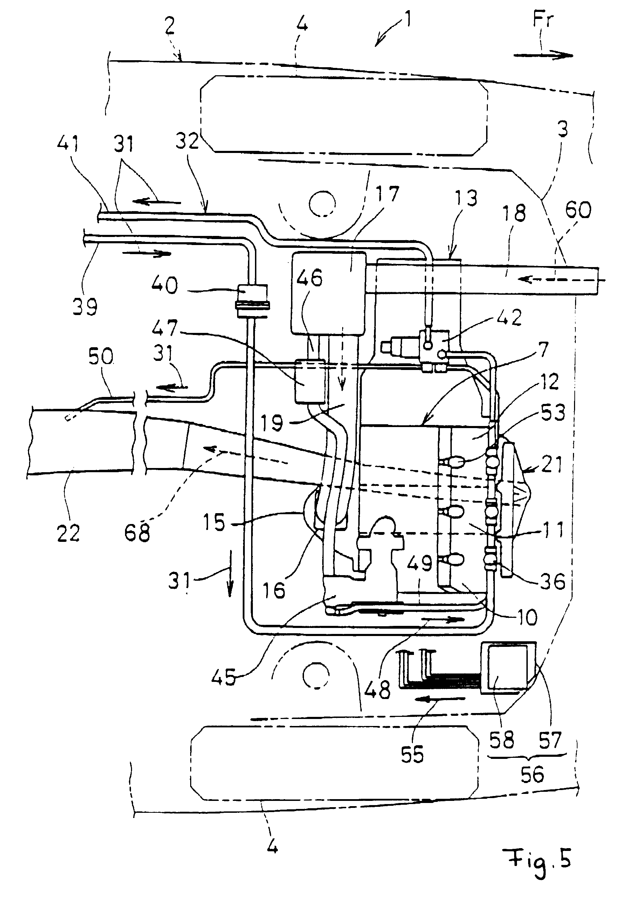

As is particularly apparent in Figures 3 and 5, when the above engine 7 is running, air 60 passes consecutively through the first air intake pipe 18, the air cleaner 17, the second air intake pipe 19, the throttle valve 16, and the air intake manifold prior to entering the engine. The fuel 31 is injected along with compressed air 48 into the engine 7 by means of the various fuel injection valves 36. The spark plugs 53 ignite the mixture which is burned. The exhaust gas 68 generated by this combustion is then expelled through the above manifold 21, the first exhaust pipe 22, the catalyst pipe 23, the first muffler 24, the second muffler 25, the second exhaust pipe 26 and the third muffler 27, in succession.

In the above described case, part of the air 60, after it has been filtered by the above air cleaner 17, is utilized in the production of compressed air 48 by the air pump 45. The pressure of the compressed air 48, which is injected with fuel 31 by means of the various fuel injection valves 36, is regulated appropriately by the above pressure differential regulator 42.

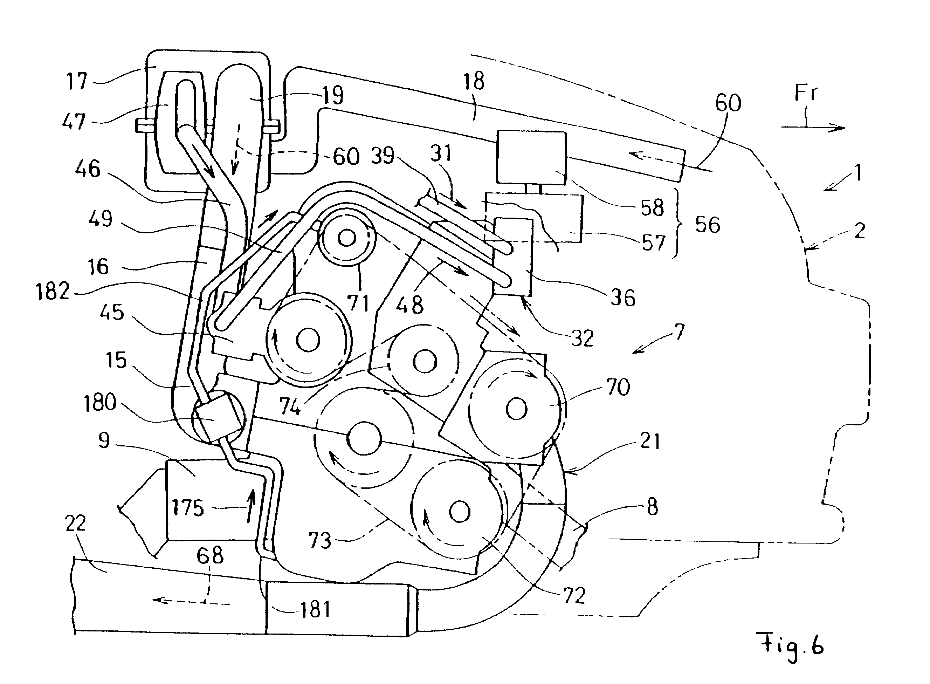

Figures 6 and 8 show a power steering oil pump 70, a vacuum pump 71 for the brakes, and the compressor 72 for the air conditioning. These devices, along with the above air pump 45, are driven by the above mentioned engine 7 by means of a belt drive mechanism 73. 74 is the idler.

As shown in Figure 8, the alternator 76 is linked with the above pump 71 on the rear surface of the above engine 7. 77 is the starter motor.

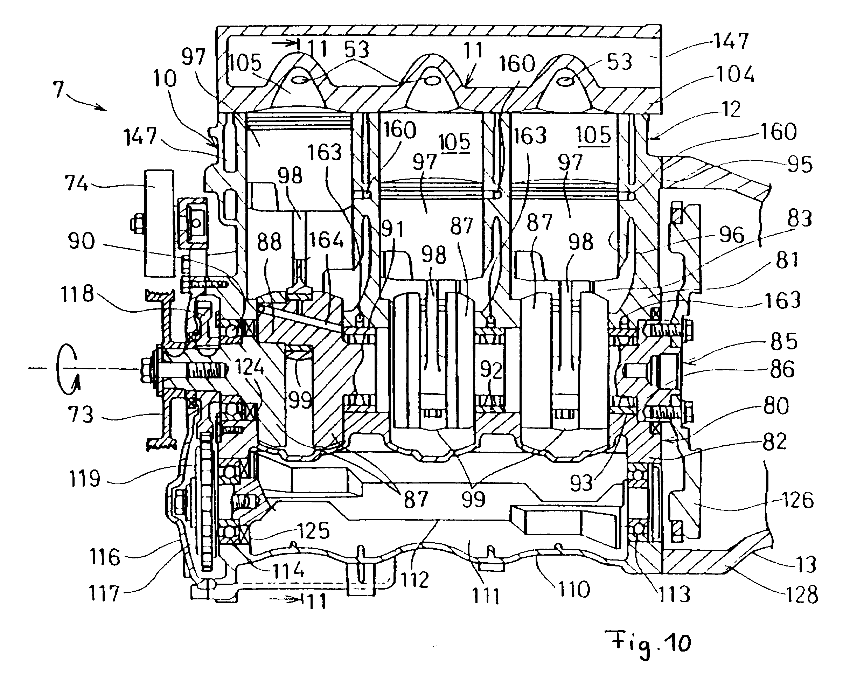

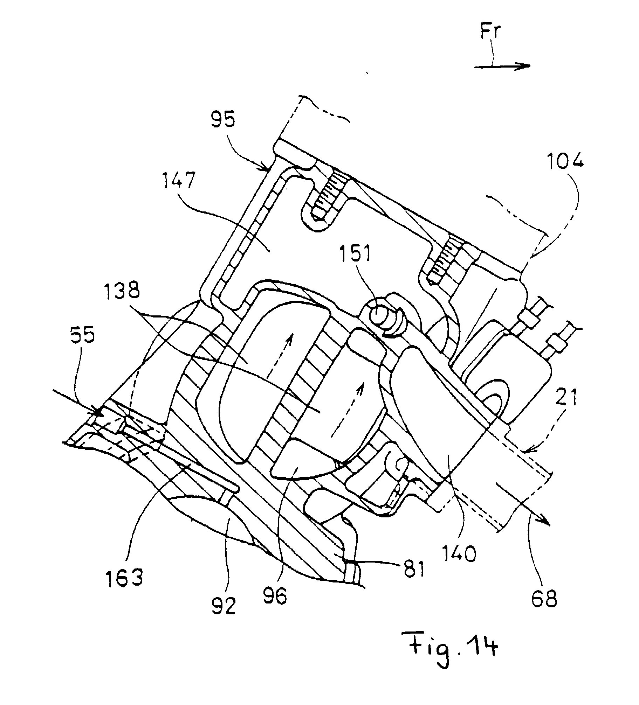

As shown in Figures 10 through 19, the above engine 7 includes a crankcase 80 divided into an upper case 81 and a lower case 82, which are bolted together. The crank chamber 83 inside the above crankcase 80 holds the crankshaft 85 extending roughly horizontally left and right. The right end of this crankshaft 85 drives the oil pump 70, the vacuum pump 71 and other equipment by means of the above belt drive mechanism 73.

The above crankshaft 85 comprises a main crankshaft 86 and three pairs of crank arms 87 with crank pins 88 bridging each of the crank arm 87 pairs. A first through fourth bearing set 90-93, held between the adjoining surfaces of the above upper case 81 and lower case 82, supports the above main crankshaft 86.

A unit consisting of three cylinders 95 aligned left and right projects upward from the above case 81, and this unit corresponds to the pertinent first through third cylinders 10-12. The cylinder unit 95 contains the respective cylinder bores 96. Freely movable pistons 97 have been inserted into the above mentioned cylinder bores 96. The respective pistons 97 are linked to crank pins 88 by means of connecting rods 98. More specifically, the large ends 99 of these connecting rods 98 are linked to the above crank pins 88, while the small ends 101 of the some connecting rods 98 are linked to the above mentioned pistons 94 by piston pins 102.

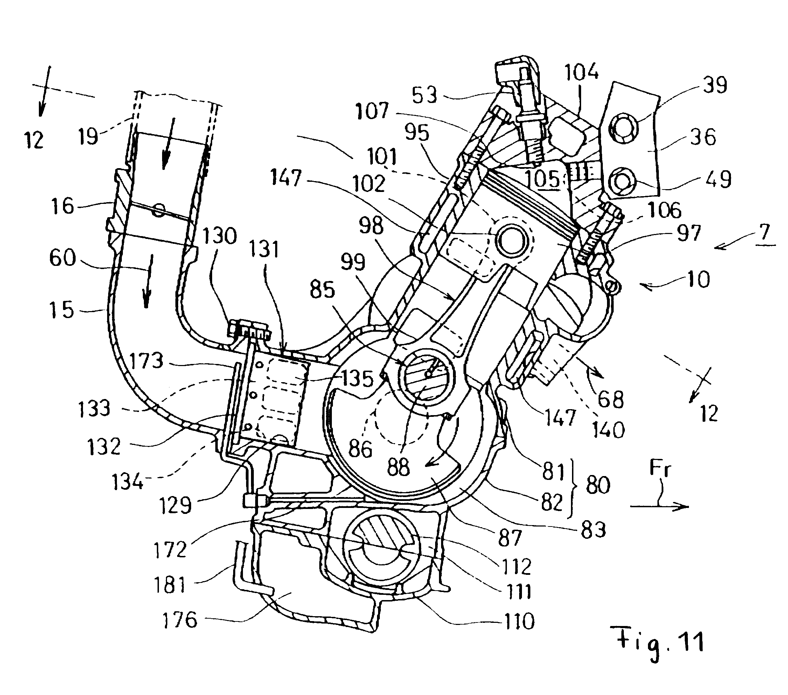

The cylinder head 104 is attached to the top of the above mentioned cylinder unit 95, and combustion chambers 105 are formed in the spaces bounded by the above mentioned cylinders 95 and pistons 97. The above fuel injection valves 36 and spark plugs 53 are removably attached to the above cylinder head 104. As shown particularly in Figure 11, the nozzles 106 of the above fuel injection valves, and the discharge areas 107 for the spark plugs are at the boundary area of the above combustion chambers 105.

As shown in Figures 10, 11, 15 and 17, a balancer case 110 covers the bottom side of the above lower case 82; this balancer case 110 is removably fastened to the above lower case.

A balancer chamber 111 is created in the space between the above lower case 82 and the balancer case 110. The balancer shaft 112 is housed roughly horizontally, extending left and right in this balancer chamber 111. This balancer shaft 112 is positioned beneath the above crankshaft 85 and it extends parallel to this crankshaft 85. Left bearings 113 and right bearings 114, which are held between the adjoining surfaces of the above mentioned lower case 82 and the balancer case 110, support this balancer shaft 112. A side cover 116 covers the right side walls of the above balancer case 80, of cylinders 95 and balancer case 110; said side cover 116 contains gear chamber 117.

A drive gear 118 is attached to the right side of the above mentioned crankshaft 85. A follower gear 119, which engages the drive gear 118, is attached to the right end of the above balancer shaft. Thus the rotation of the above balancer shaft 112 is ganged to that of the above mentioned crankshaft 85 by means of the aforementioned drive gear 118 and follower gear 119.

In the above described configuration, the follower gear 119 comprises a base 120 affixed to the right end of the above balancer shaft 112 and the gear unit 121 engaging the above drive gear 118; a ring-shaped rubber damper 122 is located between this base area 120 and the gear unit 121, said damper 122 being attached to the base by pins 123.

A crankshaft seal 124 is located between the side of the above gear chamber 117 and the side of the crank chamber 83 to prevent the flow of lubricating oil 55, and the balancer shaft seal 125 similarly separates the side of the gear chamber 117 from the side of the balancer chamber 111.

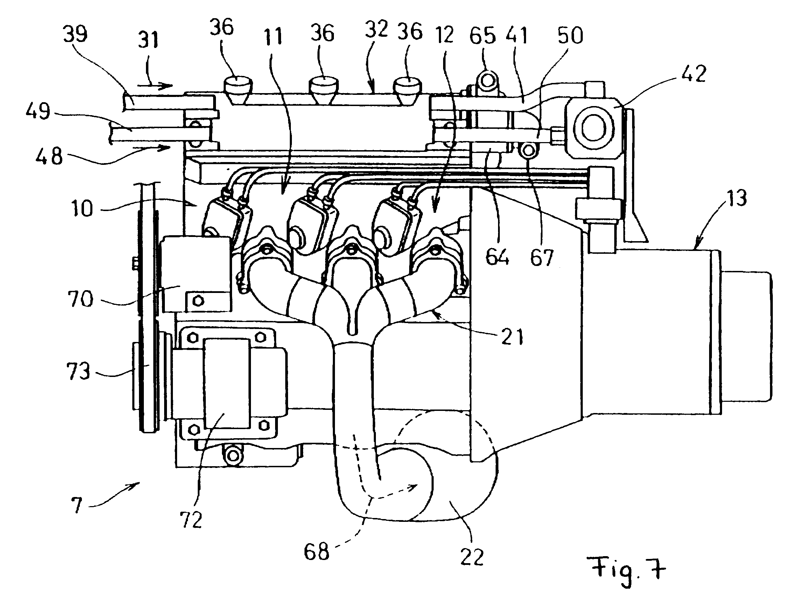

Figures 7, 8 and 10 show that the flywheel cover 126 is fastened at the left end of the above crankshaft 85, and the drive from the above mentioned crankshaft 85 is transmitted to the input side of the above drive transmission device 13 through flywheel 126.

The transmission case 128 for the above drive transmission device, and the above mentioned side cover 16 are respectively bolted over the upper case 81 and lower case 82 of the above crankcase 80, over the cylinder 95 and the balancer case 110. That configuration enhances strength and reduces vibrations and noise.

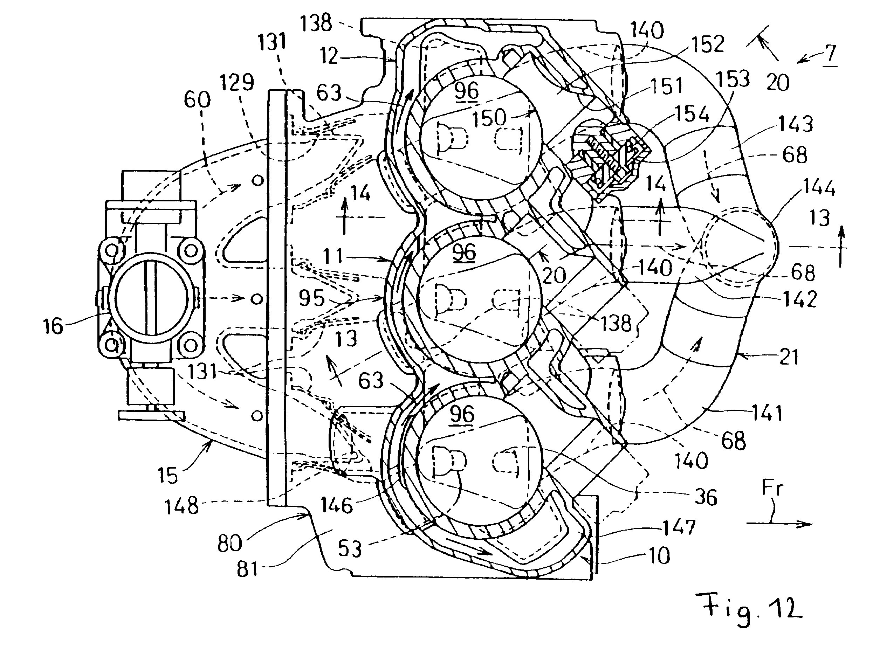

Figures 11 and 12 show the air intake ports 129 formed for the respective first through third cylinders 10-12 in the rear wall of the above crankcase 80; the above air intake manifold 15 is removably attached by bolts 130 to the perimeters of the openings of said air intake ports 129. Reed valves 131 have been mounted in each of the above air intake ports 129.

The above reed valves 131 are each equipped with a flange 132 attached to the above mentioned crankcase 80 and are sandwiched between the rear wall of the aforementioned crankcase 80 and the front end of the air intake manifold, and on integral valve body 133 is present on this flange 132 and projects from it toward the crank chamber 83. The top cross-sectional plane of this valve body 133 is triangular and longer in the top-bottom dimension. On the left and right walls of this valve body 133 are three valve holes 134 running from top to bottom. A thin, resilient reed 135 is present which opens and closes these valve holes 134, and this reed 135 is supported on one end by the above valve body 133. In its free state, this reed 135 resiliently closes the above mentioned valve holes 134.

As shown in Figures 12 through 14, three scavenging passages 138 which are located around the cylinder holes 96 and extending from the crank chamber 83 to the combustion chambers 105 are present in the cylinder unit 95.

Exhaust passages 140 pass from the various combustion chambers 95 to the front of the cylinder unit 95. The above exhaust manifold 21, on the other hand, comprises a first through third short pipes 141 - 143, which correspond to the above mentioned first through third cylinders 10 - 12. The rear ends of these first through third short pipes are connected to the opening edge of the various exhaust passages 140. Additionally, the front ends of the above mentioned first through third short pipes 141-143 bend forward and down in arcuate manner when viewed from the side and are connected to a collection manifold 144. This collection manifold 144 is joined to the front end of the above first exhaust pipe 22.

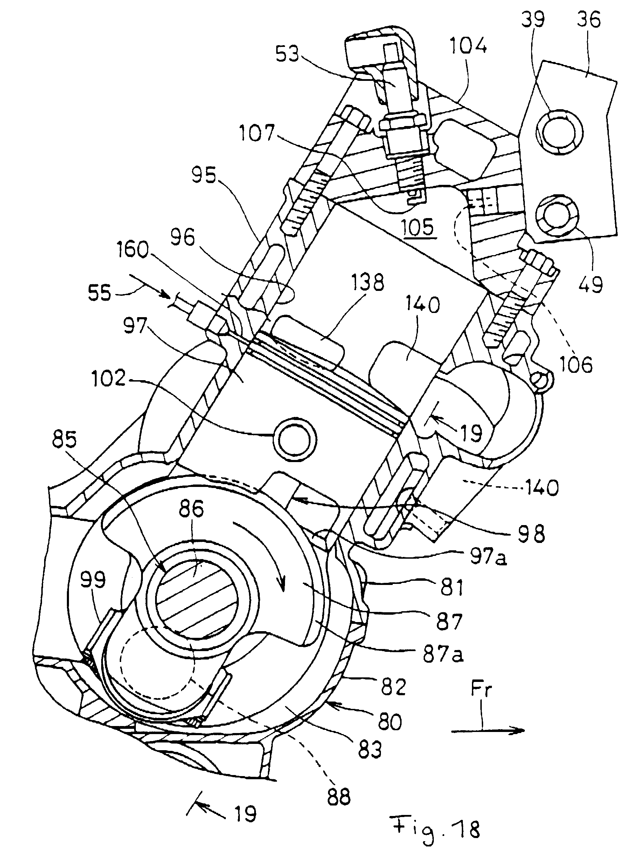

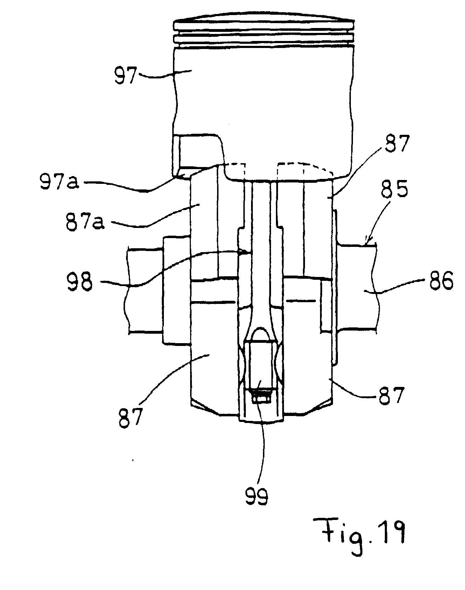

When the engine is running, the pistons 97 ascend in the cylinder bores 96 from the lower deadpoint position shown in Figures 18 and 19, causing the air intake and compression processes. When this happens, a negative pressure is generated in the crank chamber 83 and reed valve 131 is opened by the bending of reed 135. At that time, air 60 passes through the above mentioned second air intake pipe 19, the throttle valve 16, the air intake manifold 15 and the reed valve 131 to enter the crank chamber 83. On the other hand, air that had been previously taken into the combustion chamber 105, is compressed at the same time by the rise of piston 97.

Before said piston 97 reaches the upper deadpoint shown in Figure 11, the fuel injector valve 36 injects fuel 31 and compressed air 48 into the air 60 compressed inside the above combustion chamber 105, generating an air/fuel mixture inside the combustion chamber 105. Next, just before piston 97 reaches its upper deadpoint, the discharge of spark plug 53 ignites the above air/fuel mixture which begins gas expansion to drive down the above piston 97.

With the descent of piston 97, the air 60 that was previously taken into the crank chamber 83 is compressed and reed valve 131 is closed. Then, as the piston 97 further descends, the air 60 inside the above crank chamber is even further compressed, that is, it undergoes precompression in the crank chamber.

During the descent of the above piston 97, first the exhaust passage 140 is opened, the combustion gases generated from the above mentioned combustion then passing through it and being expelled as exhaust gas 68. In other words, this is the exhaust process. As the piston 97 descends even farther, the various scavenging passages 138 are opened. When this happens, the air 60 that was precompressed as described above in the crank chamber 83 passes through the scavenging passage 138 and into the combustion chamber 105. This is, in other words, the scavenging process. This air 60 expels the part of the above combustion gases remaining in the above combustion chamber 105 into the exhaust passage 140. Concurrently the above mentioned air 60 fills the above combustion chamber 105 and the piston returns to its lower deadpoint, as shown in Figures 18 and 19.

From this time on, the above mentioned piston 97 will rise again, and the previously described process is repeated, causing the crankshaft 85 to rotate in the direction shown in the various Figures by the arrow. It is this crankshaft 85 that provides the output for the drive of the engine 7.

As shown in Figures 18 and 19, in order to prevent the bottom edge of the skirt of the piston 97 from making contact with the crank arm 87 when the piston 97 reaches its lower deadpoint, relief areas 97a, 87a have been formed in the respective opposing surfaces of the bottom edge of the piston skirt and of the crank arm. These allow the connecting rods 98 to be shorter, and the overall height of the engine 7 to be lower.

Figures 10 through 12 show that a water jacket 147 has been integrated into the circumferential wall of the cylinder unit 95. A water inlet 148 is present that connects to the above water jacket 147 at the rear wall of cylinder unit 95 near the above first cylinder 10. The outlet of the above mentioned water pump 62 is connected to this water inlet 148. On the other hand, a water outlet that connects to the above water pipe 65 is present at roughly the center of the left side wall of the cylinder head 104 in the vicinity of the above mentioned third cylinder 12. The above water pipe 65 comprises a water outlet shaped to correspond to the uppermost area of the above water jacket 147.

There is an integral thick-wall area 146 on the inside wall surface of the water jacket 147 opposite the above water inlet 148. This thickness of the walled area 146 prevents it from becoming overcooled in relation to the other inner wall surfaces of the aforementioned water jacket 147.

When the engine 7 is running, as described above, the water pump 62 that is driven by it sends coolant 63 into the above mentioned water jacket 147 to cool the cylinder unit 95 and the cylinder head 104. A part of the coolant is also diverted to cool the air pump 45.

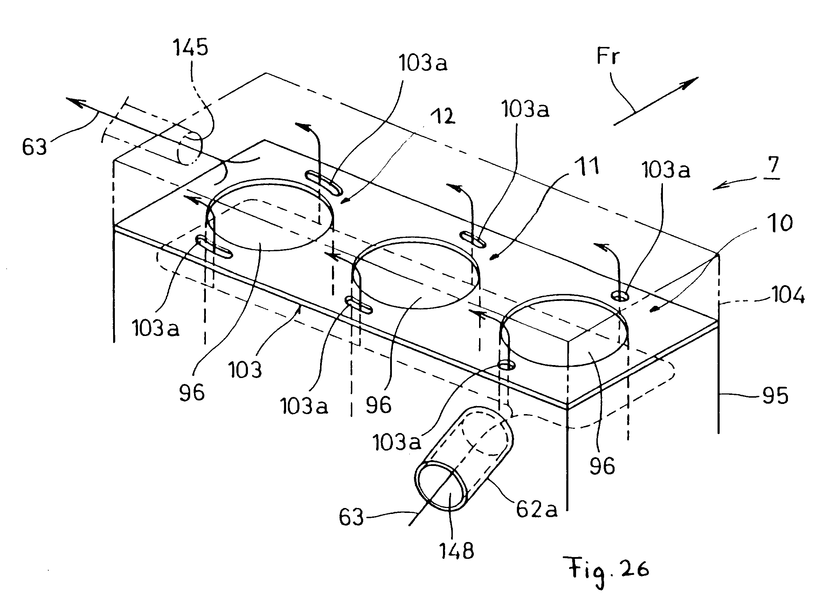

As shown in figure 26, the coolant jacket 147 comprises a first jacket passage formed in the cylinder block 95 around the cylinder bores 96, a second jacket passage formed in the cylinder head 104 and a plurality of communication passages 103a for communicating the first and second coolant passages. Two communication passages 103a are associated with each cylinder bore 96 at opposite sides thereof. The coolant inlet opening 148 is communicated with the first jacket passage formed in the cylinder block 95 next to a first cylinder 10, while the coolant outlet passage 145 is communicated with the second jacket passage formed in the cylinder head 104 next to a last cylinder 12 although the coolant jacket arrangement is shown for a three cylinder in-line engine, it is to be noted that it may also be applied to an engine having more or less than three cylinders.

As can be seen from figure 26, the cross-sectional area of those communication passages closer to the coolant inlet opening 148, that are the communication passages 103a associated with said first cylinder 10, is smaller than the cross-sectional area of those communication passages 103a closer to the coolant outlet opening 145.

Figures 7, 12, 13 and 20 show the exhaust valve 150, which con adjust the exhaust timing by varying the upper edge position of the exhaust port 149 in the above exhaust passages, and which opens into cylinder bores 96.

Regarding the exhaust valve 150, a valve hole 151 formed in the cylinder unit 95 passes from the outside of the above cylinder unit 95 to the top of the above mentioned exhaust port 149. A valve body 152 is located in the above mentioned valve hole 151 and is supported so that it is freely rotatable about its axis. This valve body 152 evinces a semi-circular cross-section in the area next to the above exhaust port 149.

A pulley 153 is attached to the above mentioned valve body 152 and a wire 154 links this pulley 153 to a servo motor.

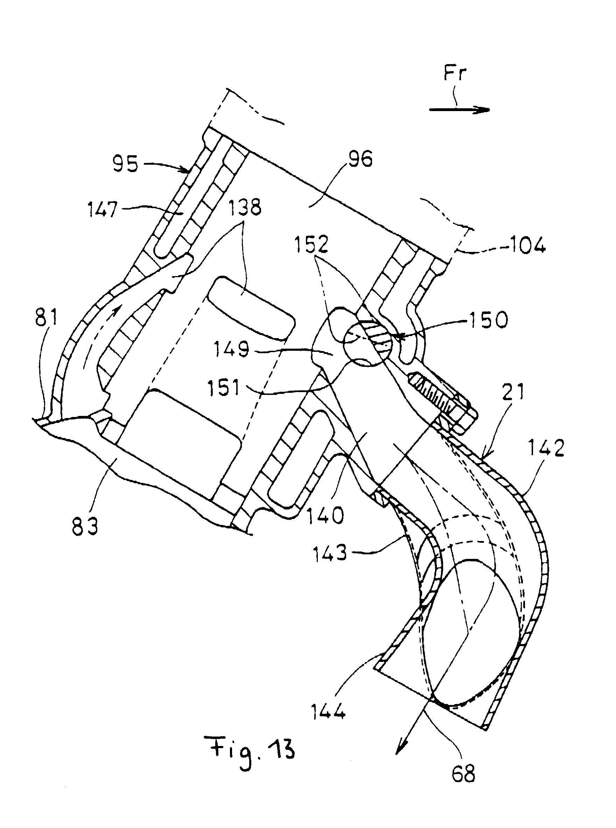

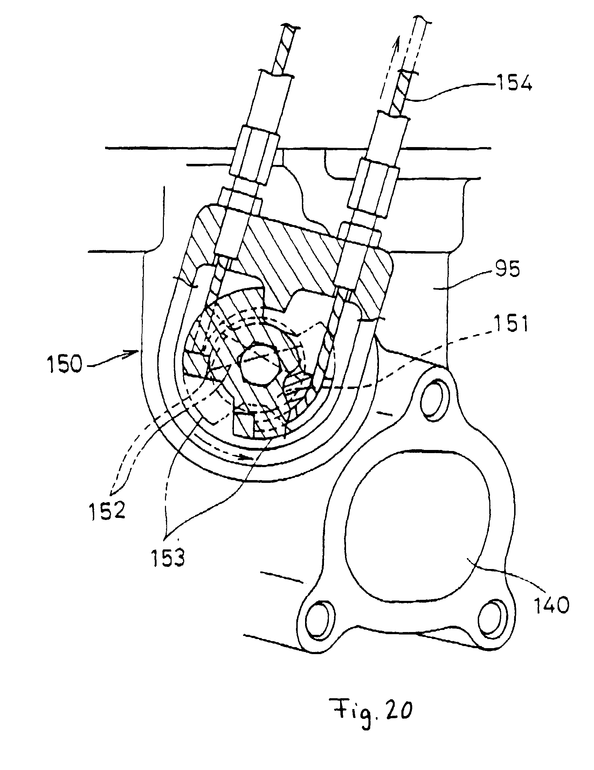

When the engine is operating in the low- to mid-rpm ranges, that fact is detected by means of sensor signals, and a control device drives the above mentioned servo motor. As a result the wire 154 and pulley 153 will rotate the valve 152 into the position shown by the dashed lines in Figures 13 and 20. At this time, the upper edge position of the above exhaust port 149 is shifted downward and the exhaust timing is thereby delayed by that amount.

On the other hand, when the engine 7 is operating at high rpm, the above servo motor rotates the valve body 152 into the position shown by the solid line in Figure 13 and by the broken line in Figure 20. The resulting action is the reverse of the above; the position of the upper edge of the exhaust port 149 is shifted upward, and the exhaust timing is advanced by that amount.

Thus the exhaust timing can be adjusted to match the speed of the engine 7. Engine performance is improved thereby. The above described control of the exhaust valve 150 also applies when the engine 7 is operating under high loads.

The aforementioned lubrication device will now be described in detail with reference to Figures 5, 10, 11 and 14 through 16.

The outlet of the aforementioned oil pump device 57 of the above lubrication device 56 connects through the first oil passage 160 with the above mentioned cylinder unit 95 and piston 97 to lubricate the sliding areas. The lubricating oil 55 to lubricate these sliding areas is supplied from oil tank 58.

The outlet of the same oil pump device 57 also connects with the above second through fourth bearing sets 91-93 through the second oil passage 163; and lubricating oil 55 is supplied to said bearings from the oil tank 58.

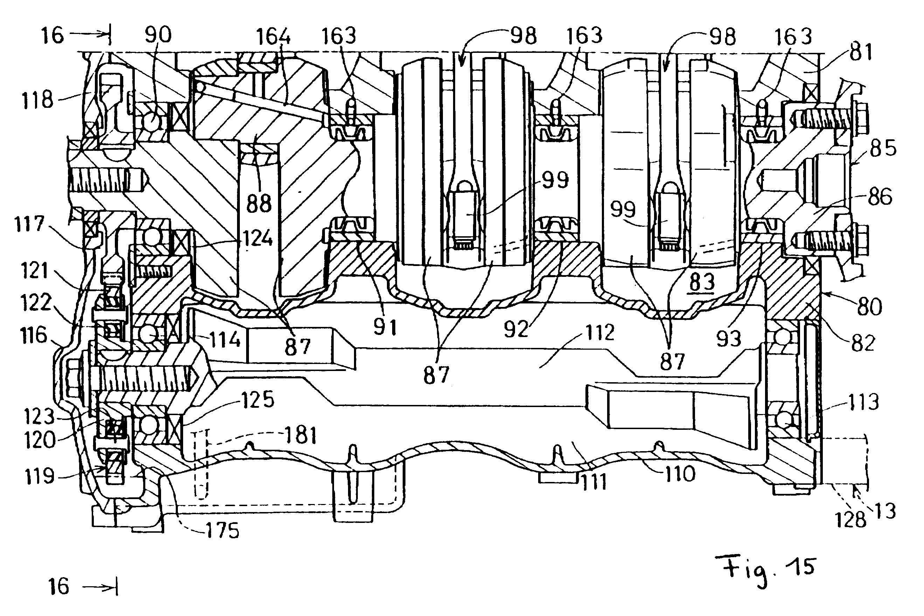

As shown in Figures 10 and 15, the above second oil passage 163 passes into the above mentioned second through fourth bearings 91-93 and into a third oil passage 164 formed in crankshaft 85, which in turn passes into crank pins 88 and into the large end 99 of the connecting rods 98 to supply lubricating oil 55 to said areas as well.

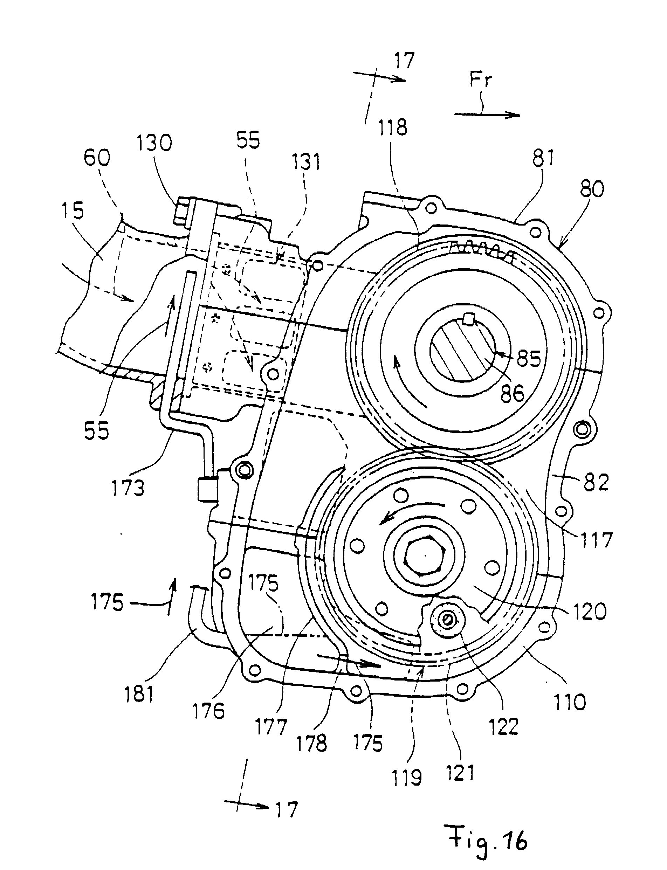

As shown in Figures 11 and 16, the above mentioned lubrication device 56 evinces the following structure:

The lubricating device 56 consists of a fifth oil passage 172 formed in the lower case 82, and one end of this fifth oil passage 172 opens into the bottom of the crank chamber while the other end extends downward and backward to open into the rear surface of the same lower case 82. The oil line 172 connects at one end to this opening and the other end passes through the front of the air intake manifold 15, extending upward. The extending end of this oil line 173 is positioned over reed valve 131 and upstream of the reed valve 131 with respect to the flow of air 60.

Lubricating oil 55 which collects in the bottom of the above mentioned crank chamber 83 is drawn into the fifth oil passage 172 and the oil line 173 to the top of the above reed valve 131 due to the pressure differential between the crankcase 83 and the air intake manifold 15. In addition, when said lubricating oil 55 passes the reed valve 131 and is drawn into the crank chamber 83, it is scattered about and thereby lubricates the connection between piston 97 and connecting rod 98.

As shown in Figures 6, 8, 10, 11 and 15 through 17, an oil chamber 176 is present on the back side of the above balancer chamber 11. The right end of this oil chamber 176 is adjacent to and linked with the above gear chamber 117. Gear oil 175 collects in the bottoms of the gear chamber 117 and of the above oil chamber 176, and can flow back and forth between them. The bottom of the follower gear 119 is bathed in this gear oil 175. As the above follower gear wheel 119 rotates, the gear oil 175 is carried up with it to lubricate the engagement area between the follower gear wheel 119 and the above drive gear wheel 118.

Part of the gear oil being carried up by the above mentioned follower gear 119 and the drive gear 118 is supplied to the above first bearing set 90 and to the right bearings 114 to keep them lubricated.

A baffle plate 177 which extends along the back surface of the above follower gear 119 is formed as a unit on the balancer case 110 and the side cover. The above mentioned baffle plate partitions the above gear chamber 117 and oil chamber 116. Thus, gear oil 175 carried up especially by the left and right side surfaces of the above follower gear flies over the aforementioned baffle plate 177 under its own inertia. A small through-hole 178 is present in the bottom of the above baffle plate 177 and passes from the bottom of the aforementioned oil chamber 176 to gear chamber 117.

The above baffle plate 177 also serves to prevent an excess of unneeded gear oil 175 from being brought up by the follower gear 119 and drive gear 118, and the through hole 178 allows the supply of an appropriate amount of gear oil 175 to the aforementioned follower gear 119 side.

As is especially apparent in Figure 6, an electrically driven gear type oil pump 180 is mounted behind the engine 7. The bottom of the above oil chamber 176 is linked by means of an intake oil line 181 to the inlet of this electrically driven oil pump 180, and the outlet of said electric oil pump 180 is linked to the above vacuum pump 71 by means of outlet oil line 182. Gear oil 175 is thereby supplied to the oil chamber 176 of this vacuum pump 71, thereby lubricating said vacuum pump 71.

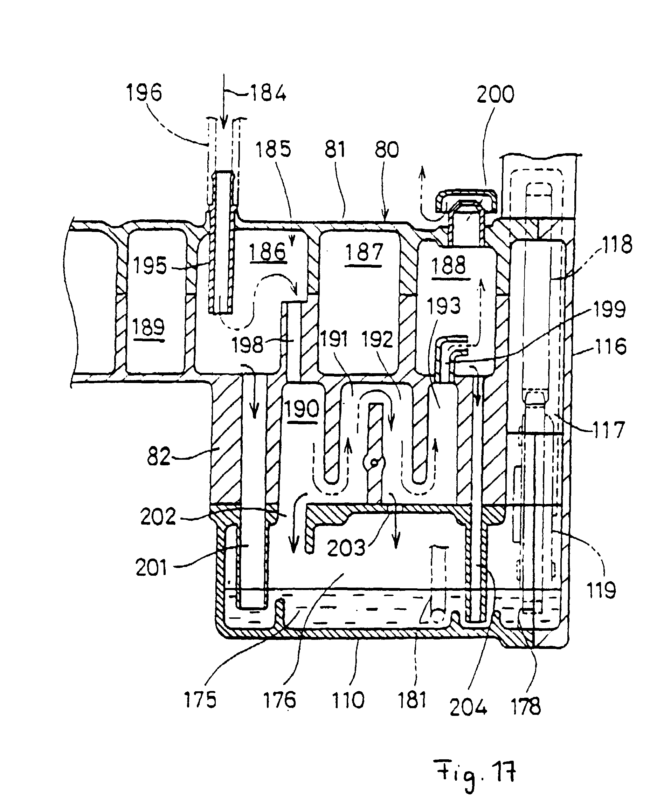

As is particularly apparent in Figure 17, the output air 184 from the aforementioned vacuum pump 71 is separated from the gear oil 175 contained in the outlet air in a breather chamber 185.

First through fourth upper chambers 186-189 are present in the back of the above crankcase 80, and these are aligned left and right. Among these first through fourth upper chambers 186-189, the second upper chamber 187 and the fourth upper chamber 189 are the areas where the above reed valves 131 are housed, and the space outside of these second upper chamber 187 and fourth upper chamber 189 contain the above first upper chamber 186 and third upper chamber 188. These chambers 186, 188 comprise a part of the above mentioned breather chamber 185. In addition, below the above first through third upper chambers 186-188 are a first through fourth lower chambers 190-193 present in the rear area of the same crankcase 80. These first through fourth lower chambers 190-193 are aligned left and right.

An inlet pipe 195 is attached to the ceiling wall of the above first upper chamber, and this inlet pipe 195 is connected to the outlet of the above vacuum pump 71 by means of air outlet pipe 196. A first air passage links the above first upper chamber 186 with the first lower chamber 190.

Through-passages connect the above mentioned first lower chamber 190 and the second lower chamber 191, and the second lower chamber 191 with the third lower chamber 192. Also, the above fourth lower chamber 193 is connected by means of a second air passage 199 to the third upper chamber 188, and the upper third chamber 188 comprises a third air passage 200 formed in its ceiling wall, and this third air passage opens to the outside of the engine 7.

A first oil flow lower passage 201 links the bottom of the oil chamber 176 with the above first upper chamber 186, and a second oil flow lower passage 202 and a third oil flow lower passage 203 connect the first lower chamber 190 with the third lower chamber 192. Furthermore, a fourth lower oil flow passage 204 connects the upper third chamber 188 with the bottom of the oil chamber 176.

When the above vacuum pump 71 is operating, outlet air 184, which contains gear oil 175, passes through the above outlet air pipe 196 and inlet pipe 195 into the above mentioned breather chamber 185. At that time, as shown by the dashed line in Figure 17, the above outlet air repeatedly moves up and down as it goes from chamber to chamber and it flows through the third air passage 200 and is returned to the downstream side of the element in the above air cleaner 17.

In addition, the repetitious up and down motion of the above outlet air 184 causes the gear oil 184 contained within it to be separated by inertia, and this gear oil 175 flows through the first through fourth lower oil flow passages 201-204 to the oil chamber 176.

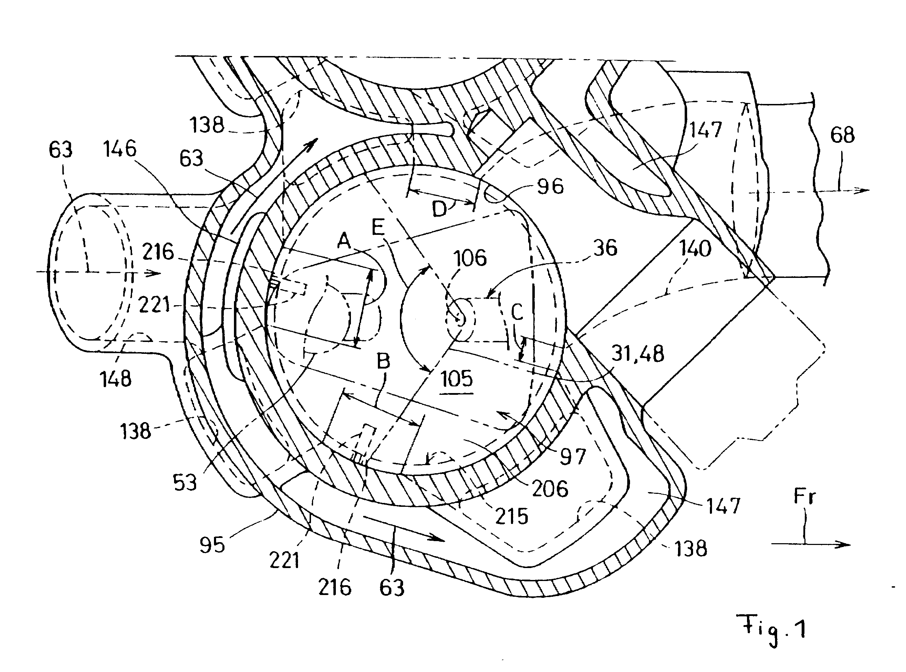

In Figures 1, 10 through 12, and 21, the above piston 97 is shown to consist of a piston unit 206, which comprises a disc-shaped piston head 207, and an integral, cylindrically shaped skirt 208 which extends downward from the piston head 207 around its circumference. A left and right pair of pin bosses 210, 210 are present at the top, inside surface of the above skirt 208, and pin holes 211 pass coaxially through each of these pin bosses 210. These pin holes 211, 211 support the above piston pin 102, inserted into them, at both ends.

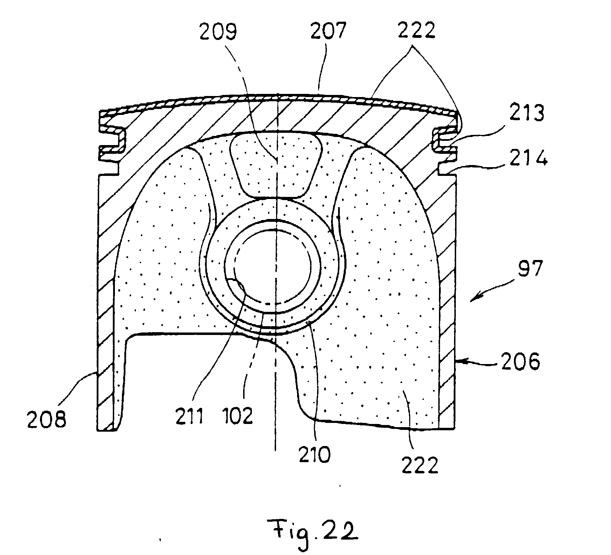

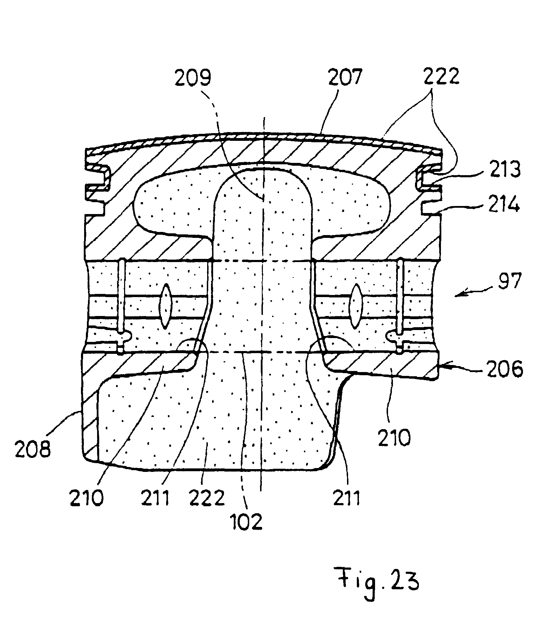

As shown in Figures 1, and 21 through 25, upper and lower ring grooves 213, 214 are present in the upper outside circumferential surface of the above piston units 206. Piston rings 215 have been fitted into these upper and lower ring grooves 213, 214 around the outside, and these are free to rotate around the above axis 209.

Part of each of the above mentioned piston rings 215 has been cut away in the circumferential direction, and these cut out areas will be called the mating opening 216. Notches above the cut ends 217 on these piston rings 215 at the mating opening 216 reduce the vertical thickness of the rings in vertical direction in these areas.

The cross section of the outer circumferential surface 218 of the above piston rings 215 forms a projecting arc. The opening at the above mentioned mating opening 216 of these piston rings allows them, in the free state, to be of slightly larger diameter than the cylinder bore. As a result, the piston rings must be resiliently compressed on their above mentioned outside circumferential surfaces 218 in order to be inserted into the cylinder bore 96; when so inserted, the above outer circumferential surfaces 218 slide against the inner circumferential surface of the cylinder bore 96 and exert pressure against it. Thereby sealing is maintained between the above crankcase 80 and the combustion chamber 105.

When the above piston 97 is sliding, the above mentioned scavenging passage 138 and exhaust passage 140, which open into the inside circumferential surface of the cylinder bore, cause sealing between the crankcase 80 and the combustion chamber 105 to be diminished if the above mating openings 216 are in a corresponding position.

Here, as is apparent from the top view of Figure 1, the mating opening 216 for the upper piston ring is located in area A, and the mating opening 216 for the lower piston ring 215 is located in area B, which are among the areas on the inside circumferential surface of cylinder bore 96 (labeled A, B, C, D) without openings for the scavenging passage 138 and the exhaust passage 140.

These mating openings 216 are also held in the above areas A and B, by preventing the above piston rings 215 from freely rotating about the axis 209 of piston unit 206.

The above piston rings 215 are prevented from rotating in the following manner: pin insertion holes 220 are present in the above piston unit 206 and correspond to the position of the above mating openings 216. Pins 221 are inserted into the pin holes 220 between the notched ends 217 of the mating opening 216, whereby the contact of the pin with the opening prevents the rotation of the piston rings 215.

As is especially apparent from Figure 1, the nozzle 106 for the fuel injection valve 36 is radially positioned in the above mentioned combustion chamber 105 on the front side of the above mentioned combustion chamber 105, and the opening for the exhaust passage 140 also is radially positioned. Said nozzle 106 injects fuel 31 and compressed air 48 toward the opposite side of said combustion chamber, from the front toward the back. The scope of this fuel injection is indicated by area E in Figure 1.

The discharge area 107 from the above spark plug 53 is located on the rear side of the above combustion chamber 105, and so are the mating openings 216 of the above piston rings 215 and the stop pins 221 that prevent them from rotating. In this configuration, the mating openings 216 and the stop pins 221 both lie within the above fuel injection area E. Thus, when fuel 31 and compressed air 48 are injected as described above, the above mating openings 216 and stop pins 221 are cooled by that injection spray.

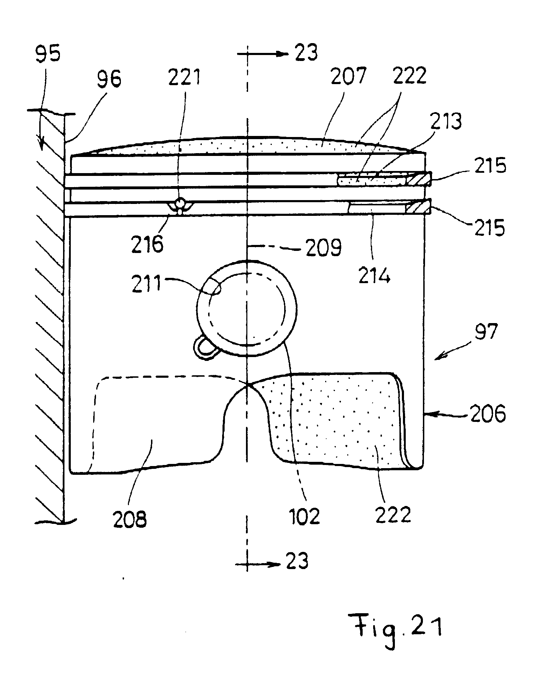

In Figures 21 to 23, the above mentioned cylinder unit 95 and the pistons 97 are both made from aluminum stock.

The above pistons 97 have undergone a hardening and lubricating alumide treatment, or other processing resulting in the coat 222, in certain areas which produces a higher degree of hardness and a lower heat conductivity on the treated surface (shown as the shaded area in the external view).

Specifically, the areas of the above piston 97 which are fitted with the above described coat 222 include the top surface of the piston head 207, the inner surface of the piston unit 206 the inner surface of the pin holes 21 and the inner surface of the upper ring groove 213.

The small end area 101 mentioned above is inside the piston 97 and it is an area where lubrication is difficult. On the other hand a significant amount of rotation takes place between the small end area 101 and the piston pin, and this area is likely to reach high temperatures. Therefore it is desirable to prevent the heat from the combustion inside the combustion chamber 105 from being transmitted to the above small end area 101.

The coat 222, was applied to the piston head 207, piston 210 and piston pin 102 in order to prevent the heat of combustion in the combustion chamber 105 from being transmitted to this small end area. There may also be heat radiating from the bottom surface of piston head 207 and from air 60 to the above small end area 101. However, since the above described coat 222 has been applied to the pathways for the transmission of the above heat of combustion, the transmission of this heat is inhibited, and the small end area 101 can be maintained at a lower temperature.

As shown in Figure 18, when the piston 97 reaches its lower deadpoint, part of the first oil passage 60 which opens into the cylinder bore 96 is opened to the area between the upper and lower ring grooves 213, 214 and lubricating oil 55 is supplied at this point.

If only the above lubricating oil 55 were supplied, it would be difficult for the lubricating oil 55 to stick to the upper groove 213. Also, this upper ring groove 213 is likely to reach high temperatures. This feature accounts for the tendency of the above upper ring groove 213 to wear.

However, the application of the coat 222 to the upper ring groove as described above prevents the above wear from occurring.

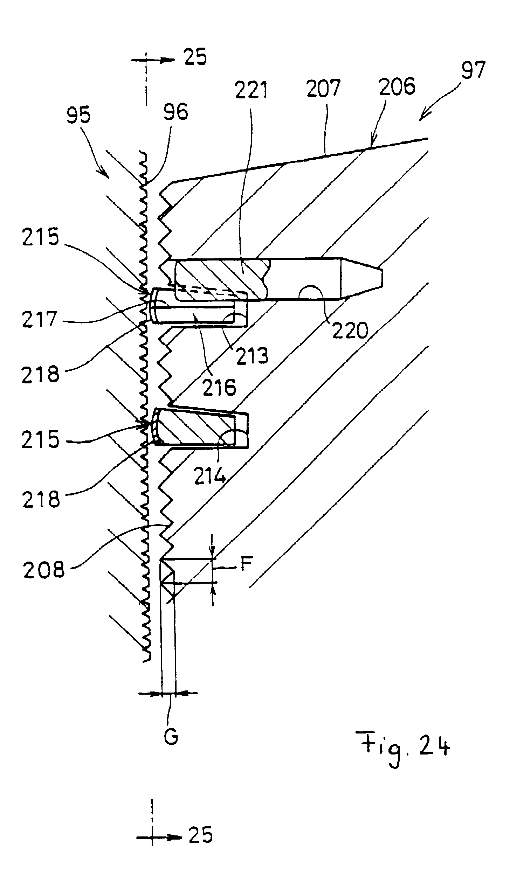

In Figure 24, the piston rings 215 are made from cast iron materials, which evince a higher heat conductivity than the stainless steel used in the prior art.

A CrN coat has been applied to the outer circumferential surface 218 of the above piston rings 215. So doing vastly improves the wear properties as the rings slide along the inside circumferential surface of the cylinder bore 96 compared to the hard chromium plating used in the prior art. These properties are nearly equivalent to those or TiN plating. Since the CrN coat can be applied as a hard film (50 µm or greater), overall longevity can be even greater than the TiN plating used in the prior art.

In addition, the above described structure allows the high temperatures from the piston unit 206, inclusive the small end area 101, to be effectively transmitted by the high heat conductivity piston rings 215 to the cylinder 95 in order to dispel the heat. This feature also works toward preventing the overall piston, and especially the small end area 101, from being heated to high temperatures.

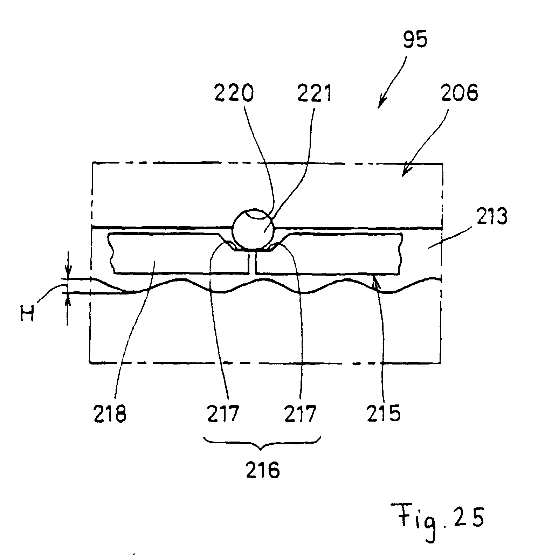

Figures 24 and 25 show that the opposite surfaces of the inside circumferential surface of the cylinder bore 96 and the surface of the piston unit 206 have been subjected to a striation process which leaves them with surfaces evincing projections and depressions. The pitch F of the projections and depressions on the piston unit 206 is 0.15 to 0.3 mm, and the height G is about 0.3 to 14 µm with the centerline average roughness being 1.2 to 3.2 Ra.

A roughened surface with a depth of 3 µm or less is present on the bottom of the upper ring groove 213.

The above structure favors the accumulation of lubricating oil 55 in the groove areas of the roughened surface, thereby improving lubricating properties.

The engine as described above comprises pistons fitted with piston rings around their top outside circumferential surface, and said pistons are inserted into cylinder bores, a part of each piston ring being cut away in the circumferential direction to form a mating opening, and the fuel injection is radially directed from one side to the other side in the combustion chamber, the mating openings of the above piston rings being located on the above mentioned other side of the combustion chamber, and said piston rings being prevented from rotating about the axis of the above piston.

When the engine is running and fuel is being injected, the fuel being radially injected from one side to the other side of the combustion chamber is directed at the mating opening of the piston rings located on the other side as described above, and this mating area is cooled by said fuel injection directed at it.

As a result, even though there is a slight gap in the above mating area, which normally would be heated to high temperatures by combustion gases due to fuel combustion; the above described cooling action prevents such heating from occurring, thereby preventing ring sticking. Consequently the piston rings can operate conventionally but they maintain a better seal between the crankcase and the combustion chamber, and they better maintain the required engine performance.

## Claims

1. Internal combustion engine comprising at least one cylinder (10,11,12) with a piston (97) reciprocatably received therein, said piston (97) being provided at its outer circumferential surface with at least one piston ring (215) having a ring opening (216) for allowing radial expansion and compression, respectively of said piston ring (215), and a fuel injection valve means (36) for injecting fuel directly into said cylinder (10,11,12), **characterized in that** each piston ring (215) is prevented from rotating around the longitudinal axis (209) of the piston (97) relative to the piston (97), and the fuel injection valve means (36) is disposed and aligned such that the fuel injection is directed towards the side of the cylinder (10,11,12) where the ring opening (216) of each piston ring (215) is positioned.

2. Internal combustion engine according to claim 1, **characterized in that** the piston (97) is provided with an upper piston ring (215) and a lower piston ring (215), the ring opening (216) of the upper piston ring (215) is positioned in a first sector (A) of the cylinder (10,11,12) and the ring opening (216) of the lower piston ring (215) is positioned in a second sector (B) of the cylinder (10,11,12), said first sector (A) and second sector (B) being circumferentially offset relative to each other and lying on the same side of the cylinder (10,11,12), and that the fuel injection is directed towards both the first and second sectors (A,B).

3. Internal combustion engine according to claim 2, **characterized in that** the fuel injection valve means comprises an injection nozzle (106) positioned on the cylinder side opposite to the side of the ring openings (216) for spraying fuel radially across the cylinder (10,11,12) into an area (E) covering both the first and second sectors (A,B).

4. Internal combustion engine according to at least one of claims 1 to 3, **characterized in that** each piston ring (215) is received in a ring groove (213,214) formed in the outer circumferential surface of the piston (97) and a projection (221) for preventing the piston ring (216) from rotating around the longitudinal piston axis (209) is formed within said ring groove (213,214) and projects from the bottom of said groove (213,214) between the ends (217) of the piston ring (215) at the ring opening (216).

5. Internal combustion engine according to at least one of claims 2 to 4, **characterized in that** the cylinder (97) comprises a cylinder block (95) with a cylinder bore (96) defined therein, and a cylinder head (104) wherein the injection valve means (36) including the injection nozzle (106) is disposed, said cylinder block (95) being provided with a plurality of scavenging passages (128) and a discharge passage (140), each of them opening into the cylinder bore (96) outside the first sector (A) and the second sector (B) where the ring openings (216) are positioned.

6. Internal combustion engine according to claim 5, **characterized in that** each cylinder (10,11,12) is provided with three scavenging passages (138) and one discharge passage (140), the first sector (A) is positioned between a first pair of adjoining scavenging passages (138) and the second sector (B) is positioned between a second pair of adjoining scavenging passages (138), and the fuel injection nozzle (106) is positioned in the cylinder head substantially on the side of the cylinder (10,11,12) where the discharge passage (140) is positioned.

7. Internal combustion engine according to at least one of claims 1 to 6, **characterized in that** the piston (97) is coated with a coat (222) having a low heat conductivity at least at the top surface (207) of the piston (97) and the ring groove (213) for the upper piston ring (215).

8. Internal combustion engine according to at least one of claims 1 to 7, **characterized in that** each piston ring (215) is made of a material having a high heat conductivity for transferring heat from the piston (97) to each cylinder (10,11,12).

9. Internal combustion engine according to at least one of claims 1 to 8, **characterized in that** the inner circumferential surface of each cylinder (10,11,12) and the circumferential surface of each piston (97) are provided with circumferential striations for accummulating lubricant therein.

10. Internal combustion engine according to at least one of claims 1 to 9 further comprising a cylinder head (104) and a cylinder block (95) with a cylinder bore (96) defined therein for reciprocatably receiving said piston (97), and a cooling system for cooling at least the cylinder (10,11,12) including a coolant pump (62) for circulating coolant (63) through a coolant passage arrangement comprising a coolant jacket (147), formed in the cylinder block (95) around the cylinder bore (96) and/or in the cylinder head (104), and a coolant inlet opening (148) and a coolant outlet opening for supplying coolant to the coolant jacket (147) and discharging the same therefrom, respectively, **characterized in that** a heat insulating means (146) for preventing the cylinder (10,11,12) from overcooling is provided on an inner surface wall of the coolant jacket (147) opposite to the coolant inlet opening (148).

11. Internal combustion engine according to claim 10, **characterized in that** the heat insulating means is formed by an integral thick-wall area (146) on the inside wall surface of the coolant jacket (147).

12. Internal combustion engine according to claim 11, **characterized in that** the thick-wall area (146) has a curved shape for directing the coolant flowing from the coolant inlet opening (148) smoothly into the coolant jacket (148).

13. Internal combustion engine according to at least one of claims 10 to 12, **characterized in that** the coolant jacket comprises a first jacket passage formed in the cylinder block (95) around the cylinder bores (96), a second jacket passage formed in the cylinder head (104) and at least one communication passage for communicating said first and second coolant passages.

14. Internal combustion engine according to at least one of claims 10 to 13, **characterized in that** a plurality of cylinder bores (96) are defined in a common cylinder block (95) and cylinder head (104) with the coolant jacket (147) formed around each of said cylinder bores (96).

15. Internal combustion engine according to claim 14, **characterized in that** the coolant inlet opening (148) is communicated with the first jacket passage (147) next to a first cylinder (10) and the coolant outlet passage is communicated with the second jacket passage (148) next to a last cylinder (12).

16. Internal combustion engine according to claim 14 or 15, **characterized in that** a plurality of communication passages are provided for communicating the first jacket passage and the second jacket passage, and the cross-sectional area of those communication passages closer to the coolant inlet opening (148) is smaller than the cross-sectional area of those communication passages closer to the coolant outlet opening.

## Patentansprüche

1. Brennkraftmaschine mit zumindest einem Zylinder (10, 11, 12), der einen darin hin und her bewegbaren Kolben (97) aufweist, wobei dieser Kolben (97) an seiner äußeren Kreisoberfläche mit zumindest einem Kolbenring (215) versehen ist, der eine Ringöffnung (216) aufweist, um eine radiale Expansion bzw. Kompression von diesem Kolbenring (215) zu ermöglichen, und mit einer Kraftstoffeinspritzventileinrichtung (36) zum Einspritzen von Kraftstoff direkt in diesen Zylinder (10,11,12), **dadurch gekennzeichnet,** daß jeder Kolbenring (215) an einer Rotation um die longitudinale Achse (209) des Kolbens (97) bezüglich dieses Kolbens (97) gehindert ist, und daß die Kraftstoffeinspritzventileinrichtung (36) derart angeordnet und ausgerichtet ist, daß die Kraftstoffeinspritzung zu der Seite des Zylinders (10, 11, 12) gerichtet ist, in welcher die Ringöffnung (216) von jedem Kolbenring (215) positioniert ist.

2. Brennkraftmaschine nach Anspruch 1, **dadurch gekennzeichnet**, daß der Kolben (97) mit einem oberen Kolbenring (215) und einem unteren Kolbenring (215) versehen ist, wobei die Ringöffnung (216) des oberen Kolbenrings (215) in einem ersten Sektor (A) des Zylinders (10, 11, 12) positioniert ist und die Ringöffnung (216) des unteren Kolbenrings (215) in einem zweiten Sektor (B) des Zylinders (10, 11, 12) positoiniert ist, wobei dieser erste Sektor (A) und dieser zweite Sektor (B) in Umfangsrichtung relativ zueinander versetzt sind und auf der gleichen Seite des Zylinders (10, 11, 12) liegen, und daß die Kraftstoffeinspritzung in Richtung auf die beiden ersten und zweiten Sektoren (A, B) gerichtet ist.

3. Brennkraftmaschine nach Anspruch 2, **dadurch gekennzeichnet**, daß die Kraftstoffeinspritzventileinrichtung eine Einspritzdüse (106) aufweist, die auf der Zylinderseite angeordnet ist, die der Seite der Ringöffnungen (216) entgegengesetzt ist, um Kraftstoff radial über den Zylinder (10, 11, 12) in einen Bereich (E) zu sprühen, der beide ersten und zweiten Sektoren (A, B) bedeckt.

4. Brennkraftmaschine nach zumindest einem der Ansprüche 1 bis 3, **dadurch gekennzeichnet**, daß jeder Kolbenring (215) in einer Ringrille (213, 214) aufgenommen ist, die in der äußeren Umfangsoberfäche des Kolbens (97) ausgebildet ist, und daß ein Vorsprung (221) innerhalb dieser Ringrille (213, 214) ausgebildet ist, um den Kolbenring (215) an einer Rotation um die longitudinale Achse (209) des Kolbens zu hindern, wobei dieser sich von dem Boden von dieser Rille (213, 214) zwischen den Enden (217) des Kolbenrings (215) bei der Ringöffnung (216) aus sich erstreckt.

5. Brennkraftmaschine nach zumindest einem der Ansprüche 2 bis 4, **dadurch gekennzeichnet**, daß der Zylinder (97) einen Zylinderblock (95) mit einer darin festgelegten Zylinderbohrung (96) aufweist und einen Zylinderkopf (104) enthält, in welchem die Einspritzventileinrichtung (36) einschließlich der Einspritzdüse (106) angeordnet ist, wobei dieser Zylinderblock (95) mit einer Vielzahl von Spülkanälen (128) und mit einem Ausgabekanal (140) versehen ist, wobei jeder von diesen sich außerhalb von diesem ersten Sektor (A) und diesem zweiten Sektor (B), in denen die Ringöffnungen (216) positioniert sind, öffnet.

6. Brennkraftmaschine nach Anspruch 5, **dadurch gekennzeichnet**, daß jeder Zylinder (10, 11, 12) mit drei Spülkanälen (138) und einem Ausgabekanal (140) versehen ist, wobei der erste Sektor (A) zwischen einem ersten Paar von einander angrenzenden Spülkanälen (138) angeordnet ist und der zweite Sektor (B) zwischen einem zweiten Paar von einander angrenzenden Spülkanälen (138) angeordnet ist, und daß die Kraftstoffeinspritzdüse (106) in dem Zylinderkopf im wesentlichen auf der Seite des Zylinders (10, 11, 12) angeordnet ist, in welcher der Auslaßkanal (140) positioniert ist.

7. Brennkraftmaschine nach zumindest einem der vorstehenden Ansprüche 1 bis 6, **dadurch gekennzeichnet**, daß der Kolben (97) mit einer Ummantelung (222) beschichtet ist, die eine geringe Wärmeleitfähigkeit zumindest an der oberen Oberfläche (207) des Kolbens (97) und der Ringrille (213) für den oberen Kolbenring (215) aufweist.

8. Brennkraftmaschine nach zumindest einem der vorstehenden Ansprüche 1 bis 7, **dadurch gekennzeichnet,** daß jeder Kolbenring (215) aus einem Material hergestellt ist, das eine hohe Wärmeleitfähigkeit aufweist, um von dem Kolben (97) zu jedem Zylinder (10, 11, 12) Wärme zu übertragen.

9. Brennkraftmaschine nach zumindest einem der vorstehenden Ansprüche 1 bis 8, **dadurch gekennzeichnet,** daß die innere Umfangsoberfläche von jedem Zylinder (10, 11, 12) und die Umfangsoberfäche von jedem Kolben (97) mit Rillen versehen sind, um darin Schmiermittel zu sammeln.

10. Brennkraftmaschine nach zumindest einem der vorstehenden Ansprüche 1 bis 9, des weiteren aufweisend einen Zylinderkopf (104) und einen Zylinderblock (95) mit einer Zylinderbohrung (96), die darin zur hin- und hergehenden Aufnahme dieses Kolbens (97) festgelegt ist, und ein Kühlsystem, um zumindest diesen Zylinder (10, 11, 12) zu kühlen, einschließlich einer Kühlmittelpumpe (62), um dieses Kühlmittel (63) durch eine Kühlmittelkanalanordnung zu zirkulieren, die einen Kühlmittelmantel (147) enthält, der in dem Zylinderblock (95) um die Zylinderbohrung (96) und/oder in dem Zylinderkopf (104) ausgebildet ist, und eine Kühlmitteleinlaßöffnung (148) und eine Kühlmittelauslaßöffnung, um Kühlmittel dem Kühlmittelmantel (147) zuzuführen bzw. dieses von diesem abzuführen, **dadurch gekennzeichnet**, daß eine Wärmeisolationseinrichtung (146) vorhanden ist, um den Zylinder (10, 11, 12) vor einer Unterkühlung zu schützen, wobei diese auf einer inneren Oberflächenwandung des Kühlmittelmantels (147) der Kühlmitteleinlaßöffnung (148) entgegengesetzt angeordnet ist.

11. Brennkraftmaschine nach Anspruch 10, **dadurch gekennzeichnet**, daß die Wärmeisolationseinrichtung von einem einstückigen, dickwandigen Bereich (146) auf der inneren Wandungsseite des Kühlmittelmantels (147) gebildet ist.

12. Brennkraftmaschine nach Anspruch 11, **dadurch gekennzeichnet**, daß der dickwandige Bereich (146) eine gekrümmte Form aufweist, um das von der Kühlmitteleinlaßöffnung (148) fließende Kühlmittel sanft in den Kühlmittelmantel (148) zu leiten.

13. Brennkraftmaschine nach zumindest einem der Ansprüche 10 bis 12, **dadurch gekennzeichnet,** daß der Kühlmittelmantel einen ersten Mantelkanal aufweist, der in dem Zylinderblock (95) um die Zylinderbohrungen (96) ausgebildet ist, einen zweiten Mantelkanal enthält, der in dem Zylinderkopf (104) ausgebildet ist, und zumindest einen Kommunikationskanal aufweist, um diese ersten und zweiten Kühlmittelkanäle miteinander zu verbinden.

14. Brennkraftmaschine nach zumindest einem der vorstehenden Ansprüche 10 bis 13, **dadurch gekennzeichnet**, daß eine Vielzahl von Zylinderbohrungen (96) in einem gemeinsamen Zylinderblock und dem Zylinderkopf (104) festgelegt sind, wobei der Kühlmittel mantel (147) um jeder dieser Zylinderbohrungen (96) ausgebildet ist.

15. Brennkraftmaschine nach Anspruch 14, **dadurch gekennzeichnet**, daß die Kühlmitteleinlaßöffnung (148) am nächsten zu einem ersten Zylinder (10) mit dem ersten Mantelkanal (147) verbunden ist, und daß der Kühlmittelauslaßkanal am nächsten zu einem letzten Zylinder (12) mit dem zweiten Mantelkanal (148) verbunden ist.

16. Brennkraftmaschine nach Anspruch 14 oder 15, **dadurch gekennzeichnet**, daß eine Vielzahl von Verbindungskanälen vorgesehen ist zur Kommunikation des ersten Mantelkanals mit dem zweiten Mantelkanal, und daß der Querschnittsbereich von diesen Verbindungskanälen, die näher an der Kühlmitteleinlaßöffnung liegen, geringer ist als der Querschnittsbereich von diesen Kommunikationskanälen, die näher an der Kühlmittelauslaßöffnung liegen.

## Revendications

1. Moteur à combustion interne comprenant au moins un cylindre (10, 11, 12) recevant dans celui-ci un piston (97) pouvant avoir un mouvement alternatif, ledit piston (97) comportant sur sa surface extérieure en circonférence au moins un segment de piston (215) comportant une ouverture de segment (216) destinée à permettre respectivement une dilatation et une compression du dit segment de piston (215), et des moyens d'injection de carburant (36) destinés à injecter directement du carburant à l'intérieur du dit cylindre (10, 11, 12), caractérisé en ce que chaque segment de piston (215) est empêché de tourner autour de l'axe longitudinal (209) du piston (97) par rapport au piston (97), et que les moyens d'injection de carburant (36) sont disposés et alignés de sorte que l'injection de carburant est dirigée vers le côté du cylindre (10, 11, 12) à l'endroit où est positionnée l'ouverture de segment (216) de chaque segment de piston (215).

2. Moteur à combustion interne selon la revendication 1, caractérisé en ce que le piston (97) comporte un segment de piston supérieur (215) et un segment de piston inférieur (215), l'ouverture de segment (216) du segment de piston (215) est positionnée dans un premier secteur (A) du cylindre (10, 11, 12) et l'ouverture de segment (216) du segment de piston inférieur (215) est positionnée dans un second secteur (B) du cylindre (10, 11, 12), ledit premier secteur (A) et ledit second secteur (B) étant décalés en circonférence l'un par rapport à l'autre et étant situés sur le même côté du cylindre (10, 11, 12), et en ce que l'injection de carburant est dirigée à la fois vers les premier et second secteurs (A, B).

3. Moteur à combustion interne selon la revendication 2, caractérisé en ce que les moyens d'injection de carburant comprennent une buse d'injection (106) positionnée sur le côté de cylindre opposé au côté des ouvertures de segment (216) afin de diffuser de manière radiale du carburant dans le cylindre (10, 11, 12) sur une zone (E) qui recouvre à la fois les premier et second secteurs (A, B).

4. Moteur à combustion interne selon au moins l'une des revendications 1 à 3, caractérisé en ce que chaque segment de piston (215) est reçu dans une gorge de segment (213, 214) formée dans la surface extérieure en circonférence du piston (97) et qu'une saillie (221) destinée à empêcher la rotation du segment de piston (216) autour de l'axe longitudinal de piston (209) est formée à l'intérieur de ladite gorge de segment (213, 214) et est en saillie à partir du fond de ladite gorge (213, 214) entre les extrémités (217) du segment de piston (215) à l'ouverture de segment (216).

5. Moteur à combustion interne selon au moins l'une des revendications 2 à 4, caractérisé en ce que le cylindre (97) comprend un bloc cylindre (95) comportant un alésage de cylindre (96) défini dans celui-ci, et une culasse (104) dans laquelle sont disposés les moyens d'injection (36) comprenant la buse d'injection (106), ledit bloc cylindre (95) comportant une pluralité de passages d'évacuation (128) et un passage d'échappement (140), chacun d'entre eux s'ouvrant à l'intérieur de l'alésage de cylindre (96) à l'extérieur du premier secteur (A) et du second secteur (B) où sont positionnées les ouvertures de segment (216).

6. Moteur à combustion interne selon la revendication 5, caractérisé en ce que chaque cylindre (10, 11, 12) comporte trois passages d'évacuation (138) et un passage d'échappement (140), le premier secteur (A) est positionné entre une première paire de passages d'évacuation contigus (138) et le second secteur (B) est positionné entre une seconde paire de passages d'évacuation contigus (138), et la buse d'injection de carburant (106) est positionnée dans la culasse essentiellement sur le côté du cylindre (10, 11, 12) où est positionné le passage d'échappement (140).

7. Moteur à combustion interne selon au moins l'une des revendications 1 à 6, caractérisé en ce que le piston (97) comporte un revêtement (222) à faible conductibilité calorifique au moins sur la surface supérieure (207) du piston (97) et sur la gorge de segment (213) du segment de piston supérieur (215).

8. Moteur à combustion interne selon au moins l'une des revendications 1 à 7, caractérisé en ce que chaque segment de piston (215) est fabriqué dans un matériau à haute conductibilité calorifique afin de transmettre la chaleur en provenance du piston (97) à chaque cylindre (10, 11, 12).

9. Moteur à combustion interne selon au moins l'une des revendications 1 à 8, caractérisé en ce que la surface interne en circonférence de chaque cylindre (10, 11, 12) et la surface en circonférence de chaque piston (97) comportent des stries en circonférence destinées à accumuler du lubrifiant dans celles-ci.

10. Moteur à combustion interne selon au moins l'une des revendications 1 à 9 comprenant en outre une culasse (104) et un bloc cylindre (95) comportant un alésage de cylindre (96) défini dans celui-ci afin de recevoir en mouvement alternatif ledit piston (97), et un système de refroidissement destiné à refroidir au moins le cylindre (10, 11, 12) comprenant une pompe à liquide de refroidissement (62) destinée à faire circuler un liquide de refroidissement (63) au travers d'un aménagement de passage pour liquide de refroidissement comprenant une chambre de refroidissement (147) formée dans le bloc cylindre (95) autour de l'alésage de cylindre (96) et / ou dans la culasse (104), et une ouverture d'admission de liquide de refroidissement (148) et une ouverture de sortie de liquide de refroidissement destinées respectivement à alimenter la chambre de refroidissement (147) en liquide de refroidissement et à évacuer ce liquide de celle-ci, caractérisé en ce que des moyens d'isolation de chaleur (146) destinés à empêcher un refroidissement excessif du cylindre (10, 11, 12) sont disposés sur une paroi de surface interne de la chambre de refroidissement (147) située à l'opposé de l'ouverture d'admission de liquide de refroidissement (148).

11. Moteur à combustion interne selon la revendication 10, caractérisé en ce que les moyens d'isolation de chaleur sont formés par une superficie à paroi épaisse (146) intégrée sur la surface de paroi intérieure de la chambre de refroidissement (147).

12. Moteur à combustion interne selon la revendication 11, caractérisé en ce que la superficie à paroi épaisse (146) a une forme courbe afin de diriger en douceur le liquide de refroidissement qui s'écoule depuis l'ouverture d'admission de liquide de refroidissement (148) à l'intérieur de la chambre de refroidissement (147).

13. Moteur à combustion interne selon au moins l'une des revendications 10 à 12, caractérisé en ce que la chambre de refroidissement comprend un premier passage de chambre formé dans le bloc cylindre (95) autour des alésages de cylindre (96), un second passage de chambre formé dans la culasse (104) et au moins un passage de communication destiné à faire communiquer lesdits premier et second passages de chambre de refroidissement.

14. Moteur à combustion interne selon au moins l'une des revendications 10 à 13, caractérisé en ce qu'une pluralité d'alésages de cylindre (96) est définie dans un bloc cylindre commun (95) et dans une culasse commune (104), la chambre de refroidissement (147) étant formée autour de chacun des dits alésages de cylindre (96).

15. Moteur à combustion interne selon la revendication 14, caractérisé en ce que l'ouverture d'admission de liquide de refroidissement (148) est en communication avec le premier passage de chambre (147) à proximité du premier cylindre (10) et que le passage de sortie de liquide de refroidissement est en communication avec le second passage de chambre (147) à proximité d'un dernier cylindre (12).

16. Moteur à combustion interne selon la revendication 14 ou la revendication 15, caractérisé en ce qu'une pluralité de passages de communication est aménagée afin de faire communiquer le premier passage de chambre avec le second passage de chambre, et que la superficie en coupe transversale de ces passages de communication plus proches de l'ouverture d'admission de liquide de refroidissement (148) est inférieure à la superficie en coupe transversale de ces passages de communication plus proches de l'ouverture de sortie de liquide de refroidissement.
